# EUROPEAN PATENT SPECIFICATION

(11) **EP 3 970 514 B1**
(45) Date of publication and mention of the grant of the patent: **05.07.2023**
(21) Application number: 20197143.9
(22) Date of filing: 21.09.2020
(51) Int. Cl.: A24C 5/01, A24D 1/20, A24F 40/465

(54) **METHOD FOR MANUFACTURING AEROSOL GENERATING ARTICLES**
VERFAHREN ZUR HERSTELLUNG VON AEROSOLERZEUGUNGSARTIKELN
PROCÉDÉ DE FABRICATION D'ARTICLES DE GÉNÉRATION D'AÉROSOL

(43) Date of publication of application: 23.03.2022
(73) Proprietor: JT International SA, 1202 Geneva (CH)
(72) Inventor: WAGNER, Marcus, 22159 Hamburg (DE); SCHWANEBECK, Julia, 21502 Geesthacht (DE); STAMER, Martina, 22927 Grosshansdorf (DE); SCHMIDT, Marlo-Leander, 21029 Hamburg (DE); SEITZ, Felix, 22087 Hamburg (DE)
(74) Representative: Serjeants LLP

(56) References cited:
- WO-A1-2019/129694
- DE-A1-102018 132 628
- US-A1- 2020 114 097

## Description

### Technical Field

The present disclosure relates generally to aerosol generating articles, and more particularly to an aerosol generating article for use with an aerosol generating device for heating the aerosol generating article to generate an aerosol for inhalation by a user. Embodiments of the present disclosure relate in particular to a method for continuously manufacturing aerosol generating articles. The present disclosure is particularly applicable to the manufacture of aerosol generating articles for use with a portable (hand-held) aerosol generating device.

### Technical Background

The popularity and use of reduced-risk or modified-risk devices (also known as aerosol generating devices or vapour generating devices) has grown rapidly in recent years as an alternative to the use of traditional tobacco products. Various devices and systems are available that heat or warm aerosol generating substances to generate an aerosol for inhalation by a user.

A commonly available reduced-risk or modified-risk device is the heated substrate aerosol generating device, or so-called heat-not-burn device. Devices of this type generate an aerosol or vapour by heating an aerosol generating substrate to a temperature typically in the range 150°C to 300°C. Heating the aerosol generating substrate to a temperature within this range, without burning or combusting the aerosol generating substrate, generates a vapour which typically cools and condenses to form an aerosol for inhalation by a user of the device.

Currently available aerosol generating devices can use one of a number of different approaches to provide heat to the aerosol generating substrate. One such approach is to provide an aerosol generating device which employs an induction heating system. In such a device, an induction coil is provided in the device and an inductively heatable susceptor is provided to heat the aerosol generating substrate. Electrical energy is supplied to the induction coil when a user activates the device which in turn generates an alternating electromagnetic field. The susceptor couples with the electromagnetic field and generates heat which is transferred, for example by conduction, to the aerosol generating substrate and an aerosol is generated as the aerosol generating substrate is heated.

It can be convenient to provide both the aerosol generating substrate and the inductively heatable susceptor together, in the form of an aerosol generating article which can be inserted by a user into an aerosol generating device. As such, there is a need to provide a method which facilitates the manufacture of aerosol generating articles, and in particular which enables aerosol generating articles to be mass-produced easily and consistently.

DE 10 2018 132628 A1 discloses a manufacturing method wherein susceptor patches are cut from a continuous susceptor band and adhered to a continuous band of aerosol generating substrate. US 2020/114097 A1 and WO2019/129694 A1 disclose similar manufacturing methods.

### Summary of the Disclosure

According to a first aspect of the present disclosure, there is provided a method for continuously manufacturing aerosol generating articles, the method comprising:
(i) providing a continuous web or a continuous strip of an aerosol generating substrate, the continuous web or the continuous strip having a substantially flat surface;
(ii) providing a continuous web of susceptor material;
(iii) intermittently applying an adhesive to a surface of the continuous web of susceptor material to form adhesive areas on the surface;
(iv) continuously cutting the continuous web of susceptor material at positions between the adhesive areas to form at least one susceptor patch;
(v) adhering the at least one susceptor patch to the substantially flat surface of the continuous web or the continuous strip of aerosol generating substrate; and
(vi) forming the continuous web or the continuous strip of aerosol generating substrate and the susceptor patch adhered to the surface thereof into a continuous rod. Aerosol generating articles produced by the method are for use with an aerosol generating device for heating the aerosol generating substrate, without burning the aerosol generating substrate, to volatise at least one component of the aerosol generating substrate and thereby generate a heated vapour which cools and condenses to form an aerosol for inhalation by a user of the aerosol generating device. The aerosol generating device is a hand-held, portable, device.

In general terms, a vapour is a substance in the gas phase at a temperature lower than its critical temperature, which means that the vapour can be condensed to a liquid by increasing its pressure without reducing the temperature, whereas an aerosol is a suspension of fine solid particles or liquid droplets, in air or another gas. It should, however, be noted that the terms 'aerosol' and 'vapour' may be used interchangeably in this specification, particularly with regard to the form of the inhalable medium that is generated for inhalation by a user.

The method according to the present disclosure facilitates the manufacture of aerosol generating articles and in particular enables aerosol generating articles to be mass produced consistently and with relative ease. By cutting the continuous web of susceptor material at positions between the adhesive areas, the soiling of apparatus components (e.g., a cutting unit) used to perform one or more of the steps of the manufacturing method can be avoided, or at least minimised.

Steps (i) and (ii) may be performed sequentially, in any order, or may be performed simultaneously.

Step (iv) may comprise continuously cutting the continuous web of susceptor material at positions between the adhesive areas to form a plurality of susceptor patches. The mass production of aerosol generating articles is thereby readily achieved.

Step (iii) may comprise intermittently applying the adhesive to the surface of the continuous web of susceptor material across substantially a full width of the web of susceptor material. In this way, a good bond between the susceptor patches and the continuous web or the continuous strip of aerosol generating substrate is achieved across the full width of the susceptor patches.

The method may comprise, after step (v) and prior to step (vi), heating the adhesive to cure or set the adhesive. This may help to strengthen the bond between the susceptor patches and the continuous web or the continuous strip of aerosol generating substrate. A trade-off is, however, needed because excessive heating may initiate the release of one or more volatile components from the aerosol generating substrate, whereas the aim is that volatile components should only be released during heating of aerosol generating articles manufactured by the method in an aerosol generating device. On the other hand, insufficient heating may not cure or set the adhesive. The heating temperature must, therefore, be carefully selected based on the characteristics of both the aerosol generating substrate and the adhesive.

Step (v) may comprise pressing the at least one susceptor patch onto the substantially flat surface of the continuous web or the continuous strip of aerosol generating substrate. The pressing step may be performed using a cam roller. By pressing the susceptor patch onto the surface of the continuous web or the continuous strip of aerosol generating substrate, the bond between the susceptor patch and the continuous web or the continuous strip of aerosol generating substrate may be enhanced.

The at least one susceptor patch may have a length between 5 mm and 50 mm, preferably between 10 mm and 30 mm. In one embodiment, the at least one susceptor patch may have a width between 0.1 mm and 5 mm, preferably between 0.5 mm and 2 mm. In another embodiment, the at least one susceptor patch may have a width between 0.1 mm and 7 mm, preferably between 1 mm and 5 mm. The at least one susceptor patch may have a thickness between 1 µm and 500 µm, possibly between 10 µm and 100 µm, preferably 50 µm. Susceptor patches with these dimensions are particularly suitable for the manufacture of aerosol generating articles.

The substantially flat surface of the continuous web or the continuous strip of aerosol generating substrate provided in step (i) may include a centre line. Step (v) may comprise adhering the at least one susceptor patch to the substantially flat surface substantially along the centre line. Accurate and consistent positioning of the susceptor patch along the centre line ensures that aerosol generating articles manufactured by the method according to the present disclosure have consistent and repeatable characteristics.

Step (v) may comprise consecutively adhering the plurality of susceptor patches to the substantially flat surface of the continuous web or the continuous strip of aerosol generating substrate with a predefined and constant spacing between each successive susceptor patch. The predefined and constant 'spacing' between each successive susceptor patch is the shortest distance between successive (i.e., adjacent) susceptor patches, i.e., the distance or gap between the edges of successive (i.e., adjacent) susceptor patches. Step (vi) may comprise forming the continuous web or the continuous strip of aerosol generating substrate and the susceptor patches into a continuous rod. The mass production of aerosol generating articles is thereby readily achieved. The use of a cam roller to press the susceptor patches onto the substantially flat surface of the continuous web or the continuous strip of aerosol generating substrate may be particularly advantageous in this embodiment, as it allows a pressing force to be easily applied at spaced positions along the continuous web or the continuous strip of aerosol generating substrate which correspond to the positions of the applied susceptor patches.

The method may further comprise (vii) cutting the continuous rod to form a plurality of individual aerosol generating articles. Each individual aerosol generating article may comprise at least one susceptor patch. Thus, step (vii) may comprise cutting the continuous rod to form a plurality of individual aerosol generating articles each comprising at least one susceptor patch. Continuous and mass production of aerosol generating articles is, thereby, readily achieved.

Step (vii) may comprise cutting the continuous rod at a position between adjacent susceptor patches. Cutting the continuous rod in this way ensures that the individual aerosol generating articles formed by cutting the continuous rod each comprise a susceptor patch and, thus, that the aerosol generating articles are consistent and repeatable. Also, because the susceptor patches are not cut during step (vii), wear during the cutting step (e.g., on a cutting unit) is minimised.

Step (vii) may comprise cutting the continuous rod substantially at a midpoint between adjacent susceptor patches. In this way, the susceptor patch is spaced inwardly from both ends of the resultant aerosol generating article and is not visible at either end of the aerosol generating article. This may improve the user acceptance of aerosol generating articles manufactured by the method according to the present disclosure. Furthermore, the susceptor is fully embedded in the aerosol generating substrate of the resultant aerosol generating article, and this may allow an aerosol or vapour to be generated more effectively because the whole of the susceptor is surrounded by the aerosol generating substrate and, therefore, heat transfer from the susceptor to the aerosol generating substrate is maximised.

The at least one susceptor patch may comprise an inductively heatable susceptor material, such as one or more, but not limited, of aluminium, iron, nickel, stainless steel, carbon steel, and alloys thereof, e.g. Nickel Chromium or Nickel Copper. With the application of an electromagnetic field in its vicinity during use of the aerosol generating article in an aerosol generating device, the susceptor material may generate heat due to eddy currents and magnetic hysteresis losses resulting in a conversion of energy from electromagnetic to heat.

The aerosol generating substrate may be any type of solid or semi-solid material. Example types of aerosol generating solids include powder, granules, pellets, shreds, strands, particles, gel, strips, loose leaves, cut leaves, cut filler, porous material, foam material or sheets. The aerosol generating substrate may comprise plant derived material and in particular, may comprise tobacco. It may advantageously comprise reconstituted tobacco, for example including tobacco and any one or more of cellulose fibres, tobacco stalk fibres and inorganic fillers such as CaCO3.

Consequently, the aerosol generating device with which the aerosol generating articles are intended for use may be referred to as a "heated tobacco device", a "heat-not-burn tobacco device", a "device for vaporising tobacco products", and the like, with this being interpreted as a device suitable for achieving these effects. The features disclosed herein are equally applicable to devices which are designed to vaporise any aerosol generating substrate.

The continuous rod may be circumscribed by a paper wrapper. Thus, the method may further comprise wrapping the continuous rod with a paper wrapper.

The aerosol generating article may be formed substantially in the shape of a stick, and may broadly resemble a cigarette, having a tubular region with an aerosol generating substrate arranged in a suitable manner. The aerosol generating article may include a filter segment, for example comprising cellulose acetate fibres, at a proximal end of the aerosol generating article. The filter segment may constitute a mouthpiece filter and may be in coaxial alignment with an aerosol generating substrate, e.g., constituted by a plurality of aerosol generating strips. One or more vapour collection regions, cooling regions, and other structures may also be included in some designs. For example, the aerosol generating article may include at least one tubular segment upstream of the filter segment. The tubular segment may act as a vapour cooling region. The vapour cooling region may advantageously allow the heated vapour generated by heating the aerosol generating substrate to cool and condense to form an aerosol with suitable characteristics for inhalation by a user, for example through the filter segment.

The aerosol generating substrate may comprise an aerosol-former. Examples of aerosol-formers include polyhydric alcohols and mixtures thereof such as glycerine or propylene glycol. Typically, the aerosol generating substrate may comprise an aerosol-former content of between approximately 5% and approximately 50% on a dry weight basis. In some embodiments, the aerosol generating substrate may comprise an aerosol-former content of between approximately 10% and approximately 20% on a dry weight basis, and possibly approximately 15% on a dry weight basis.

Upon heating, the aerosol generating substrate may release volatile compounds. The volatile compounds may include nicotine or flavour compounds such as tobacco flavouring.

### Brief Description of the Drawings

Figure 1a is a diagrammatic cross-sectional side view of a first example of an aerosol generating article;
Figure 1b is a diagrammatic cross-sectional view along the line A-A in Figure 1a;
Figure 2a is a diagrammatic illustration of an apparatus and method for manufacturing the first example of the aerosol generating article illustrated in Figures 1a and 1b;
Figure 2b is a plan view of an aerosol generating substrate and susceptor patches as the aerosol generating substrate and susceptor patches move in the direction shown by the arrow through the apparatus illustrated in Figure 2a;
Figure 3 is a plan view of a section of a continuous web of susceptor material showing adhesive areas and non-adhesive areas;
Figure 4 is a functional illustration of part of the apparatus and method of Figure 2a schematically illustrating the formation of susceptor patches from a continuous web of susceptor material and the application of the susceptor patches to a surface of a continuous web of aerosol generating substrate;
Figure 5 is a diagrammatic perspective view of a susceptor cutting unit;
Figure 6 is a diagrammatic illustration of a strip cutting unit of the apparatus of Figure 2a;
Figure 7a is a diagrammatic cross-sectional side view of a second example of an aerosol generating article;
Figure 7b is a diagrammatic cross-sectional view along the line A-A in Figure 7a;
Figure 8a is a diagrammatic illustration of a first embodiment of an apparatus and method for manufacturing the second example of the aerosol generating article illustrated in Figures 7a and 7b;
Figure 8b is a plan view of an aerosol generating substrate and susceptor patches as the aerosol generating substrate and susceptor patches move in the direction shown by the arrow through the apparatus illustrated in Figure 8a;
Figure 9 is a diagrammatic illustration of a strip cutting unit of the apparatus of Figure 8a;
Figure 10a is a diagrammatic illustration of a second embodiment of an apparatus and method for manufacturing the second example of the aerosol generating article illustrated in Figures 7a and 7b;
Figure 10b is a plan view of an aerosol generating substrate and susceptor patches as the aerosol generating substrate and susceptor patches move in the direction shown by the arrow through the apparatus illustrated in Figure 10a;
Figure 11 is a functional illustration of part of the apparatus and method of Figure 10a schematically illustrating the formation of susceptor patches from a continuous web of susceptor material and the application of the susceptor patches to a surface of a continuous strip of aerosol generating substrate; and
Figure 12 is a diagrammatic illustration of a strip cutting unit of the apparatus of Figure 10a.

### Detailed Description of Embodiments

Embodiments of the present disclosure will now be described by way of example only and with reference to the accompanying drawings.

### Aerosol Generating Article (Example 1)

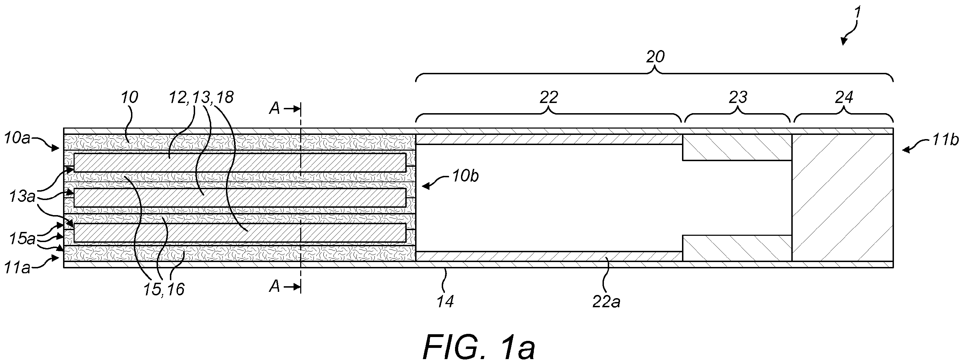

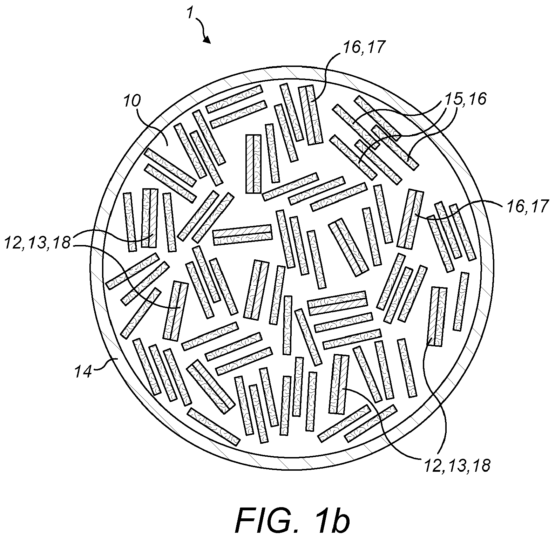

Referring initially to Figures 1a and 1b, there is shown a first example of an aerosol generating article 1 for use with an aerosol generating device that comprises an induction heating system to inductively heat the aerosol generating article 1 and thereby generate an aerosol for inhalation by a user of the device. Such devices are known in the art and will not be described in further detail in this specification. The aerosol generating article 1 is elongate, having a distal end 11a and a proximal end (or mouth end) 11b, and is substantially cylindrical. The circular cross-section facilitates handling of the article 1 by a user and insertion of the article 1 into a cavity or heating compartment of an aerosol generating device.

The aerosol generating article 1 comprises an aerosol generating substrate 10 having first and second ends 10a, 10b and an inductively heatable susceptor 12. The aerosol generating substrate 10 and the inductively heatable susceptor 12 are positioned in, and enclosed by, a wrapper 14. The wrapper 14 comprises a material which is substantially non-electrically conductive and non-magnetically permeable. In the illustrated example, the wrapper 14 is a paper wrapper and may comprise cigarette paper.

The aerosol generating article 1 may have a total length, measured between the distal end 11a and the proximal (mouth) end 11b, between 30 mm and 100 mm, preferably between 50 mm and 70 mm, possibly approximately 55 mm. The aerosol generating substrate 10 may have a total length, measured between the first and second ends 10a, 10b, between 5 mm and 50 mm, preferably between 10 mm and 30 mm, possibly approximately 20 mm. The aerosol generating article 1 may have a diameter between 5 mm and 10 mm, preferably between 6 mm and 8 mm, possibly approximately 7 mm.

The aerosol generating substrate 10 comprises a plurality of elongate first strips 15 comprising an aerosol generating material. The plurality of elongate first strips 15 constitute aerosol generating strips 16 and are substantially oriented in a longitudinal direction of the aerosol generating article 1. The elongate first strips 15 are typically foldless in the longitudinal direction to ensure that the air flow route is not interrupted and that a uniform air flow through the article 1 can be achieved.

The inductively heatable susceptor 12 comprises a plurality of elongate second strips 13 comprising an inductively heatable susceptor material. The plurality of elongate second strips 13 constitute susceptor strips 18 and are also substantially oriented in the longitudinal direction of the aerosol generating article 1. The elongate second strips 13 are foldless in the longitudinal direction to prevent hot spots in the aerosol generating substrate 10.

The aerosol generating article 1 comprises a plurality of elongate third strips 17 (see Figure 1b) comprising an aerosol generating material. The elongate third strips 17 also constitute aerosol generating strips 16 and are substantially oriented in the longitudinal direction of the aerosol generating article 1. The elongate third strips 17 have the same length as the elongate first strips 15, and thus the aerosol generating strips 16 within the aerosol generating article 1 all have the same length. The elongate second strips 13 are adhered to the elongate third strips 17, and the elongate second strips 13 and the elongate third strips 17 have the same width. In preferred embodiments, the elongate first strips 15 also have the same width as the elongate second strips 13 and the elongate third strips 17.

The elongate first strips 15, the elongate second strips 13 and the elongate third strips 17 are arranged to form a substantially rod-shaped aerosol generating article 1 and can be randomly distributed throughout the cross-section of the rod-shaped aerosol generating article 1 such that they have a plurality of different orientations within the cross-section of the aerosol generating article 1. Although not apparent from Figure 1b, a sufficient number of elongate first strips 15 are provided to substantially fill the cross-section of the aerosol generating substrate 10, and it will be understood that a smaller number of elongate first strips 15 are shown merely for illustration purposes. It should also be noted that any suitable number of elongate second strips 13 can be positioned in the aerosol generating substrate 10, depending on the heating requirements. Each of the elongate second strips 13 is advantageously surrounded by elongate first strips 15 thereby ensuring that heat transfer to the elongate first strips 15 is maximised and that the likelihood of contact between the elongate second strips 13 is minimised.

As best seen in Figure 1a, each of the plurality of elongate first strips 15 has a distal end 15a and each of the plurality of elongate second strips 13 has a distal end 13a. The distal ends 15a of the elongate first strips 15 form the first end 10a of the aerosol generating substrate 10 and, correspondingly, the distal end 11a of the aerosol generating article 1. The elongate second strips 13 are shorter than the elongate first strips 15 and the elongate third strips 17. The distal ends 13a of the elongate second strips 13 are positioned inwardly from the distal ends 15a of the elongate first strips 15. The distal ends 13a of the elongate second strips 13 are, therefore, not visible at the distal end 1 1a of the aerosol generating article 1.

The aerosol generating article 1 comprises a mouthpiece segment 20 positioned downstream of the aerosol generating substrate 10. The aerosol generating substrate 10 and the mouthpiece segment 20 are arranged in coaxial alignment inside the wrapper 14 to hold the components in position to form the rod-shaped aerosol generating article 1.

In the illustrated embodiment, the mouthpiece segment 20 comprises the following components arranged sequentially and in co-axial alignment in a downstream direction, in other words from the distal end 11a to the proximal (mouth) end 11b of the aerosol generating article 1: a cooling segment 22, a center hole segment 23 and a filter segment 24. The cooling segment 22 comprises a hollow paper tube 22a having a thickness which is greater than the thickness of the paper wrapper 14. The center hole segment 23 may comprise a cured mixture containing cellulose acetate fibres and a plasticizer, and functions to increase the strength of the mouthpiece segment 20. The filter segment 24 typically comprises cellulose acetate fibres and acts as a mouthpiece filter. As heated vapour flows from the aerosol generating substrate 10 towards the proximal (mouth) end 11b of the aerosol generating article 1, the vapour cools and condenses as it passes through the cooling segment 22 and the center hole segment 23 to form an aerosol with suitable characteristics for inhalation by a user through the filter segment 24.

The elongate first strips 15 and elongate third strips 17 typically comprise plant derived material, such as tobacco. The elongate first strips 15 and elongate third strips 17 can advantageously comprise reconstituted tobacco including tobacco and any one or more of cellulose fibres, tobacco stalk fibres and inorganic fillers such as CaCO3.

The elongate first strips 15 and elongate third strips 17 typically comprise an aerosol-former such as glycerine or propylene glycol. Typically, the elongate first strips 15 and elongate third strips 17 comprise an aerosol-former content of between approximately 5% and approximately 50% on a dry weight basis. Upon heating, the elongate first strips 15 and elongate third strips 17 release volatile compounds possibly including nicotine or flavour compounds such as tobacco flavouring.

When a time varying electromagnetic field is applied in the vicinity of the elongate second strips 13 during use of the article 1 in an aerosol generating device, heat is generated in the elongate second strips 13 due to eddy currents and magnetic hysteresis losses. The heat is transferred from the elongate second strips 13 to the elongate first strips 15 and elongate third strips 17 to heat the elongate first strips 15 and elongate third strips 17 without burning them to release one or more volatile compounds and thereby generate a vapour. As a user inhales through the filter segment 24, the heated vapour is drawn in a downstream direction through the article 1 from the first end 10a of the aerosol generating substrate 10 towards the second end 10b of the aerosol generating substrate 10, and towards the filter segment 24. As noted above, as the heated vapour flows through the cooling segment 22 and the center hole segment 23 towards the filter segment 24, the heated vapour cools and condenses to form an aerosol with suitable characteristics for inhalation by a user through the filter segment 24.

### Manufacture of Aerosol Generating Articles (Example 1)

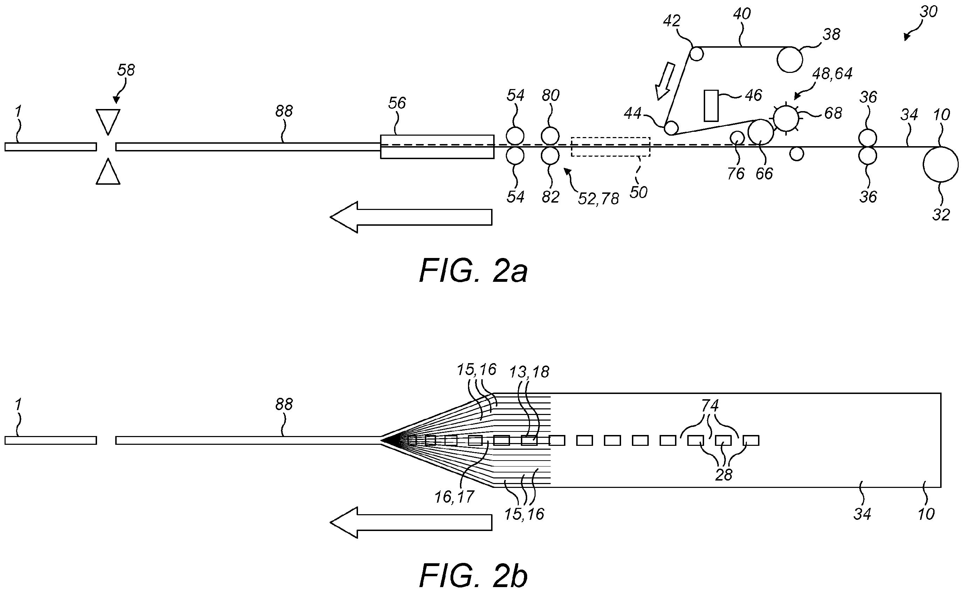

Referring to Figure 2a, there is shown a diagrammatic illustration of an apparatus 30 and method for manufacturing the first example of the aerosol generating article 1 described above with reference to Figures 1a and 1b. Figure 2b is a plan view of an aerosol generating substrate 10 and susceptor patches 28 as they move through the apparatus 30, in the direction of the arrow in Figure 2b.

The apparatus 30 comprises a substrate supply reel 32 (e.g. a first bobbin) which carries a continuous web 34 of an aerosol generating substrate 10 having a substantially flat surface and first feed rollers 36 for controlling the feed of the continuous web 34 of aerosol generating substrate 10. The apparatus 30 may also include a web tension regulator and a web edge control system as will be understood by one of ordinary skill in the art, but these additional components are not essential in the context of the present disclosure and have, therefore, been omitted for the sake of simplicity.

The apparatus 30 comprises a susceptor supply reel 38 (e.g. a second bobbin) which carries a continuous web 40 of susceptor material, feed rollers 42, 44 for controlling the feed of the continuous web 40 of susceptor material, an adhesive applicator unit 46, and a susceptor cutting unit 48.

The apparatus 30 further comprises an optional heater 50, a strip cutting unit 52, feed rollers 54, a rod forming unit 56, and a rod cutting unit 58.

### Susceptor Patch Preparation

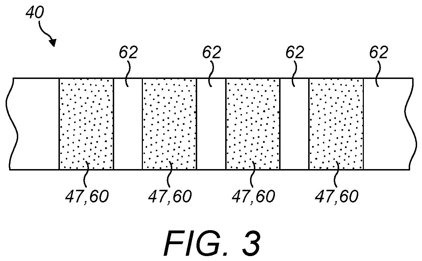

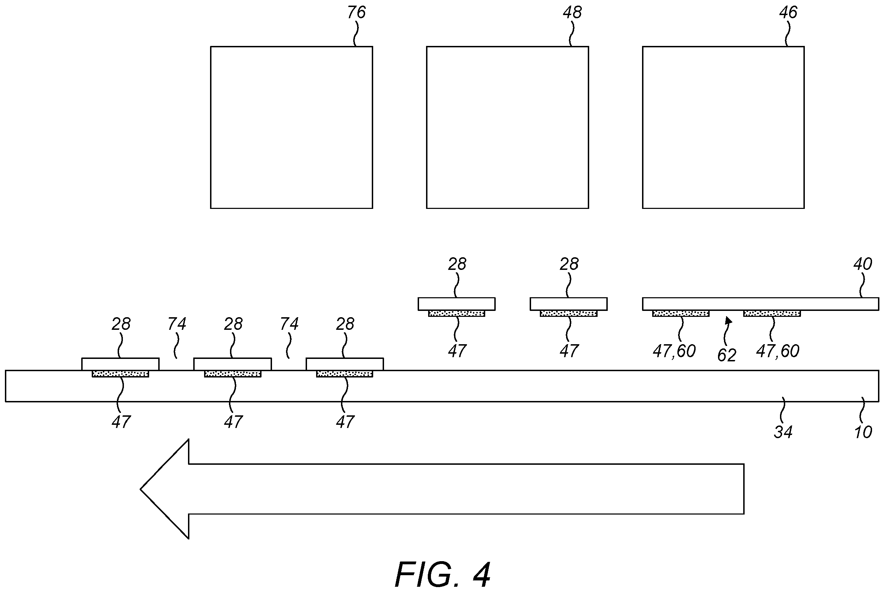

In operation, a continuous web 34 of aerosol generating substrate 10 is continuously supplied from the substrate supply reel 32. At the same time, a continuous web 40 of susceptor material is continuously supplied from the susceptor supply reel 38, via the feed rollers 42, 44, to the adhesive applicator unit 46. The adhesive applicator unit 46 applies an adhesive 47 to a surface of the continuous web 40 of susceptor material. In the illustrated example, the adhesive applicator unit 46 applies the adhesive 47 to the surface of the continuous web 40 of susceptor material intermittently, and across the full width of the web 40. In this way, discrete adhesive areas 60 (see Figures 3 and 4) are formed on the surface of the continuous web 40 of susceptor material, with adhesive-free areas 62 being formed between adj acent adhesive areas 60 in the direction of travel of the continuous web 40 of susceptor material.

The continuous web 40 of susceptor material is supplied from the adhesive applicator unit 46 to the susceptor cutting unit 48 which continuously cuts the continuous web 40 of susceptor material to form a plurality of susceptor patches 28. As best seen in Figure 2b, the continuous web 40 of susceptor material, and hence the susceptor patches 28, have a width which is substantially less than a width of the continuous web 34 of aerosol generating substrate 10. For example, the continuous web 34 of aerosol generating substrate 10 can have a width of approximately 140 mm whereas the continuous web 40 of susceptor material, and hence the susceptor patches 28, can have a width of between approximately 0.1 mm and 5 mm. In some embodiments, the susceptor patches 28 can have a length of between approximately 5 mm and 50 mm in the direction of travel of the continuous web 40 of susceptor material and can have a thickness of between approximately 1 µm and 500 µm.

In order to minimise soiling of the susceptor cutting unit 48 by the adhesive 47 applied to the continuous web 40 of susceptor material by the adhesive applicator unit 46, the susceptor cutting unit 48 cuts the continuous web 40 of susceptor material in the adhesive-free areas 62, that is at positions between the adhesive areas 60 on the surface of the continuous web 40 of susceptor material. This can be achieved by synchronising the operation of the susceptor cutting unit 48 with the movement of the continuous web 40 of susceptor material.

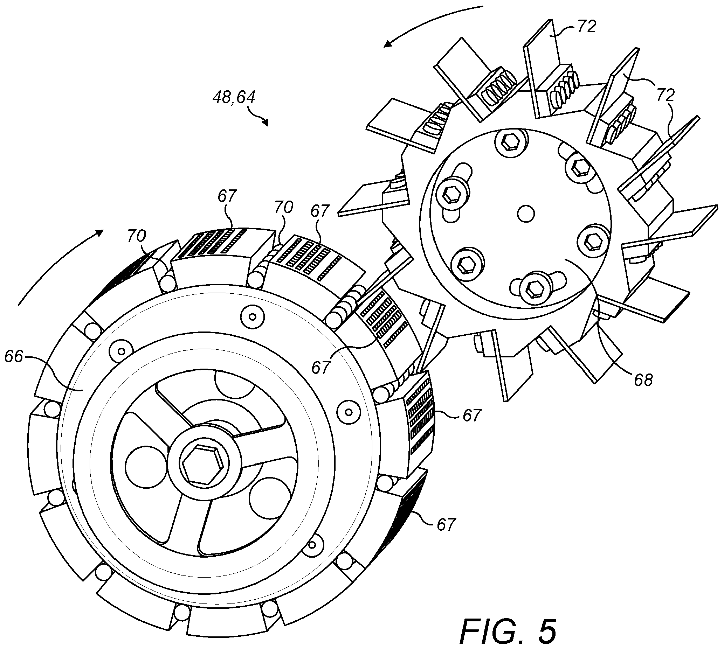

Referring to Figure 5, the susceptor cutting unit 48 comprises a rotary cutting unit 64 comprising a support drum 66 and a cutting drum 68. The support drum 66 supports the continuous web 40 of susceptor material around its periphery and includes a plurality of circumferentially spaced recesses 70 around its periphery. The support drum 66 is typically a suction drum and the continuous web 40 of susceptor material and susceptor patches 28 are supported around the periphery of the suction drum by a suction force applied through suction ports 67. The cutting drum 68 includes a plurality of circumferentially spaced cutting elements 72, for example projecting cutting blades, around its periphery and the cutting elements 72 cooperate with (e.g., extend into) the circumferentially spaced recesses 70 during synchronised rotation of both the support drum 66 and the cutting drum 68 in opposite directions as shown by the arrows in Figure 5. This results in continuous shear cutting of the continuous web 40 of susceptor material to form a plurality of susceptor patches 28.

### Susceptor Patch Application

The susceptor patches 28 provided by the susceptor cutting unit 48 can be applied to the surface of the continuous web 40 of aerosol generating substrate 10 so that there is a constant and predetermined spacing 74 between the edges of each successive susceptor patch 28, for example as shown in Figures 2b and 4. The constant and predetermined spacing 74 may, for example, be between 1 mm and 20 mm. In order to generate the constant and predetermined spacing 74 between the edges of adjacent susceptor patches 28, the susceptor cutting unit 48 permits relative movement between the continuous web 40 of susceptor material and the support drum 66 for a predetermined period of time immediately after the continuous web 40 of susceptor material carried by the support drum 66 has been cut by the cutting drum 68 to form a susceptor patch 28. This relative movement allows the continuous web 40 of susceptor material to remain stationary or to travel at a reduced speed for a short period of time after a susceptor patch 28 has been cut from the continuous web 40 of susceptor material. The relative movement between the continuous web 40 of susceptor material and the support drum 66 can be achieved by, for example, reducing the suction force applied to the continuous web 40 of susceptor material by the support drum 66, whilst at the same time maintaining an adequate suction force between the already cut susceptor patches 28 and the support drum 66 to ensure that there is no relative movement between the susceptor patches 28 and the support drum 66. In this way, a susceptor patch 28 that has been cut from the continuous web 40 of susceptor material by the susceptor cutting unit 48 is conveyed for a short period of time at a greater speed than the continuous web 40 of susceptor material from which the susceptor patch 28 has been cut, thereby generating the desired constant and predetermined spacing 74 between the edges of adj acent susceptor patches 28.

The susceptor patches 28 with the adhesive 47 applied thereto are continuously and consecutively adhered to the surface of the continuous web 34 of aerosol generating substrate 10 substantially along a centre line of the continuous web 34. Adjacent susceptor patches 28 are spaced apart in the direction of travel of the continuous web 34 of aerosol generating substrate by the constant and predetermined spacing 74 between the edges of the susceptor patches 28 that is generated when the susceptor patches 28 are formed in the susceptor cutting unit 48. In order to ensure that there is adequate adhesion between the susceptor patches 28 and the substantially flat surface of the continuous web 34 of aerosol generating substrate 10, the susceptor patches 28 can be pressed onto the substantially flat surface by a cam roller 76, shown diagrammatically in Figure 2a. The rotation of the cam roller 76 is synchronized with the movement of the continuous web 34 of aerosol generating substrate 10 so that a pressing force is applied to consecutive susceptor patches 28, but not to the spaced regions between consecutive susceptor patches 28.

Depending on the properties of the adhesive 47 applied to the continuous web 40 of susceptor material (and hence to the susceptor patches 28) by the adhesive applicator unit 46, the continuous web 34 of aerosol generating substrate 10 and the susceptor patches 28 adhered to the surface thereof can be heated by the optional heater 50. This may help to cure or set the adhesive 47, and thereby ensure a good bond between each susceptor patch 28 and the surface of the continuous web 34 of aerosol generating substrate 10. The heating temperature must be carefully selected based on the characteristics of both the aerosol generating substrate 10 and the adhesive 47, to ensure that sufficient heating is achieved to cure or set the adhesive 47, whilst at the same time avoiding or at least minimising the release of volatile components from the aerosol generating substrate 10.

### Strip Cutting

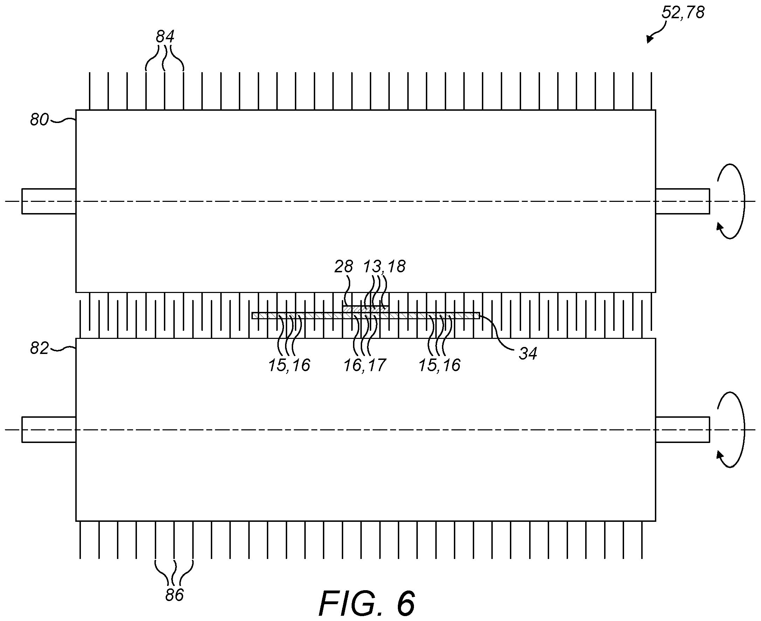

The continuous web 34 of aerosol generating substrate 10 with the spaced susceptor patches 28 adhered to its surface is fed to the strip cutting unit 52 (best seen in Figure 6) which simultaneously cuts the continuous web 34 of aerosol generating substrate 10 and the susceptor patches 28 to form a plurality of continuous aerosol generating strips 16 and a plurality of susceptor strips 18. In an embodiment, the strip cutting unit 52 cuts the continuous web 34 of aerosol generating substrate 10 and the susceptor patches 28 to form aerosol generating strips 16 and susceptor strips 18 having a strip width of approximately 1 mm. Thus, if the susceptor patches 28 have a width of 5 mm as discussed above, it will be understood that five susceptor strips 18 are formed by cutting each susceptor patch 28.

The ends of the susceptor strips 18 formed by cutting the susceptor patches 28 are longitudinally spaced by the same predetermined and constant spacing 74 that was present between the edges of adjacent susceptor patches 28. As shown in Figures 2a and 6, the strip cutting unit 52 is a rotary cutter unit 78 and comprises first and second cutting drums 80, 82. The first cutting drum 80 includes circumferentially extending first cutting formations 84 and the second cutting drum 82 includes circumferentially extending second cutting formations 86. The first and second cutting formations 84, 86 cooperate (e.g. intermesh) to shear cut the continuous web 34 of aerosol generating substrate 10 and the susceptor patches 28 in the direction of travel of the continuous web 34 to form the plurality of aerosol generating strips 16 and the plurality of susceptor strips 18. As will be appreciated from Figures 2b and 6, the aerosol generating strips 16 formed by cutting the central region of the continuous web 34 of aerosol generating substrate 10 with susceptor patches 28 adhered to its surface have susceptor strips 18 (i.e., elongate second strips 13) adhered to them, and it is the aerosol generating strips 16 formed by cutting this central region that constitute the elongate third strips 17. On the other hand, the aerosol generating strips 16 formed by cutting the side regions of the continuous web 34 of aerosol generating substrate 10, on opposite sides of the susceptor patches 28, do not have susceptor strips 18 adhered to them and it is the aerosol generating strips 16 formed by cutting these side regions that constitute the elongate first strips 15.

### Rod Formation

The aerosol generating strips 16 and the susceptor strips 18 are conveyed to the rod forming unit 56 where they are formed into a continuous rod 88. If desired, a continuous sheet of wrapping paper (not shown) can be supplied to the rod forming unit 56 from a supply reel (not shown) or can be supplied to a separate wrapping unit (again from a supply reel) which can be positioned downstream of the rod forming unit 56. As the sheet of wrapping paper is transported and guided through the rod forming unit 56 or the separate wrapping unit, it can be wrapped around the aerosol generating strips 16 and the susceptor strips 18 so that the continuous rod 88 is circumscribed by a wrapper 14.

### Rod Cutting

The continuous rod 88 (optionally circumscribed by a wrapper 14) is then transported to the rod cutting unit 58 where it is cut at appropriate positions into predetermined lengths to form multiple aerosol generating articles 1. The aerosol generating articles 1 formed by the rod cutting unit 58 may have a length between 5 mm and 50 mm, preferably between 10 mm and 30 mm. It will be understood that this length corresponds to the length of the aerosol generating substrate 10 described above with reference to Figures 1a and 1b. The continuous rod 88 is preferably cut repeatedly by the rod cutting unit 58 substantially at a midpoint between the ends of the susceptor strips 18 formed by cutting consecutive susceptor patches 28. In this way, the susceptor strips 18 are not cut by the rod cutting unit 58, thereby reducing wear on the cutting elements. Further, because the susceptor strips 18 are shorter than the aerosol generating strips 16, the ends of the susceptor strips 18 are not visible at either end of the aerosol generating articles 1 formed by the rod cutting unit 58. It will be understood that this type of method is particularly suitable for the mass production of aerosol generating articles 1.

### Final Assembly

Further units (not shown) may be arranged downstream of the rod cutting unit 58 and may be configured to provide one or more additional components such as the mouthpiece segment 20 described above and to assemble these with the individual aerosol generating articles 1 formed by the rod cutting unit 56 to form finished aerosol generating articles 1, for example of the type illustrated in Figure 1. In this case, a separate wrapping unit may be provided downstream of the rod cutting unit 58 so that the assembled components can be simultaneously wrapped to form the finished aerosol generating articles 1. The further units may form part of the apparatus 30 or may be separate, stand-alone, units forming part of a final assembly line.

### Aerosol Generating Article (Example 2)

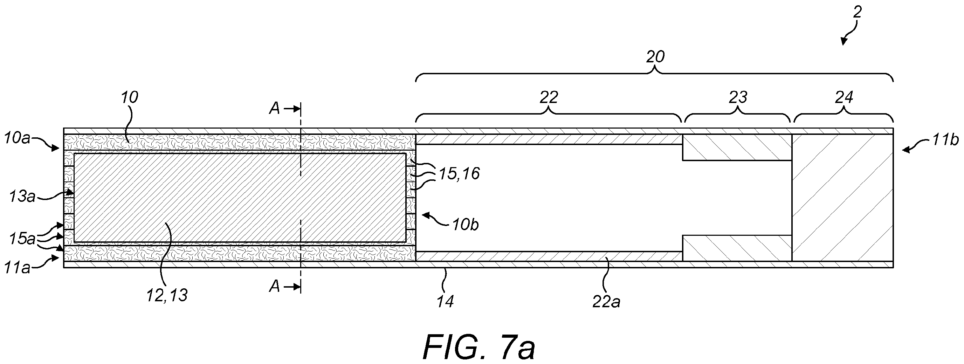

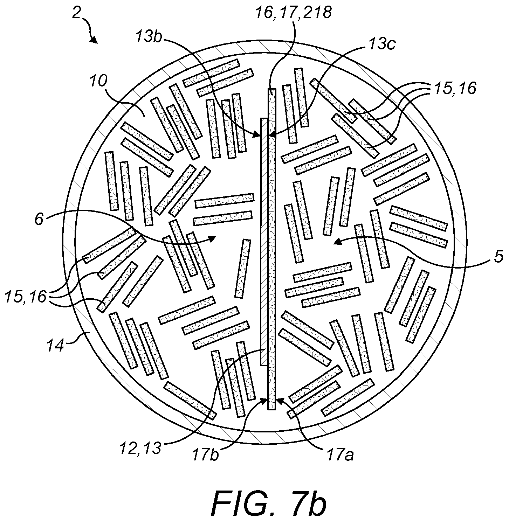

Referring now to Figures 7a and 7b, there is shown a second example of an aerosol generating article 2 for use with an aerosol generating device that comprises an induction heating system to inductively heat the aerosol generating article and thereby generate an aerosol for inhalation by a user of the device. The aerosol generating article 2 is similar to the aerosol generating article 1 described above with reference to Figures 1a and 1b and corresponding components will be identified using the same reference numerals.

The aerosol generating article 2 comprises an aerosol generating substrate 10 having first and second ends 10a, 10b and an inductively heatable susceptor 12. The aerosol generating substrate 10 and the inductively heatable susceptor 12 are positioned in, and enclosed by, a wrapper 14. The wrapper 14 comprises a material which is substantially non-electrically conductive and non-magnetically permeable. In the illustrated example, the wrapper 14 is a paper wrapper and may comprise cigarette paper.

The aerosol generating article 2 typically has a total length, measured between the distal end 11a and the proximal (mouth) end 11b, between 30 mm and 100 mm, preferably between 50 mm and 70 mm. The aerosol generating substrate 10 typically has a total length, measured between the first and second ends 10a, 10b, between 5 mm and 50 mm, preferably between 10 mm and 30 mm. The aerosol generating article 1 typically has a diameter between 5 mm and 10 mm, preferably between 6 mm and 8 mm.

The aerosol generating substrate 10 comprises a plurality of elongate first strips 15 comprising an aerosol generating material. The plurality of elongate first strips 15 constitute aerosol generating strips 16 and are substantially oriented in a longitudinal direction of the aerosol generating article 2. The elongate first strips 15 are typically foldless in the longitudinal direction to ensure that the air flow route is not interrupted and that a uniform air flow through the article 2 can be achieved.

The inductively heatable susceptor 12 comprises an elongate second strip 13 comprising an inductively heatable susceptor material. The elongate second strip 13 can, therefore, be regarded as a strip-shaped or blade-shaped elongate susceptor 12 which is also substantially oriented in the longitudinal direction of the aerosol generating article 2. As can be clearly seen in Figure 7b, each of the elongate first strips 15 has a width which is less than a width of the elongate second strip 13.

The aerosol generating article 2 comprises at least one elongate carrier strip 17 having first and second major surfaces 17a, 17b. The elongate carrier strip 17 comprises an aerosol generating material and, thus, also constitutes an aerosol generating strip 16. The elongate carrier strip 17 is substantially oriented in the longitudinal direction of the aerosol generating article 2. The elongate carrier strip 17 has the same length as the elongate first strips 15, and thus the aerosol generating strips 16 within the aerosol generating article 2 all have the same length.

The elongate second strip 13 is adhered to the elongate carrier strip 17 and, as can be clearly seen in Figure 7b, the elongate carrier strip 17 has a width which is greater than the width of the elongate second strip 13. The elongate second strip 13 has first and second opposite faces 13b, 13c. The second face 13c is adhered to the second major surface 17b of the elongate carrier strip 17 and is covered in its entirety by the elongate carrier strip 17, and more particularly by the second major surface 17b.

The elongate first strips 15, the elongate second strip 13 and the elongate carrier strip 17 are arranged to form a substantially rod-shaped aerosol generating article 2 and the elongate first strips 15 can be randomly distributed throughout the cross-section of the rod-shaped aerosol generating article 2 such that they have a plurality of different orientations within the cross-section of the aerosol generating article 2. Although not apparent from Figure 7b, a sufficient number of elongate first strips 15 are provided to substantially fill the cross-section of the aerosol generating substrate 10, and it will be understood that a smaller number of elongate first strips 15 are shown merely for illustration purposes. The elongate second strip 13 and the elongate carrier strip 17 are positioned roughly centrally within the cross-section of the aerosol generating substrate 10, and hence the aerosol generating article 2. Such an arrangement helps to ensure that there is uniform heat transfer from the elongate second strip 13 to the elongate first strips 15.

As best seen in Figure 7b, the centrally positioned elongate carrier strip 17 and the elongate second strip 13 adhered thereto define first and second regions 5, 6 within the cross-section of the aerosol generating substrate 10 and, hence, within the cross-section of the aerosol generating article 2. The first region 5 faces the first major surface 17a of the elongate carrier strip 17 and the second region 6 faces the second major surface 17b of the elongate carrier strip 17. The first and second regions 5, 6 both include a plurality of elongate first strips 15.

As best seen in Figure 7a, each of the plurality of elongate first strips 15 has a distal end 15a and the elongate second strip 13 has a distal end 13a. The distal ends 15a of the elongate first strips 15 form the first end 10a of the aerosol generating substrate 10 and, correspondingly, the distal end 11a of the aerosol generating article 2. The elongate second strip 13 is shorter than the elongate first strips 15 and the elongate carrier strip 17. The distal end 13a of the elongate second strip 13 is positioned inwardly from the distal ends 15a of the elongate first strips 15. The distal end 13a of the elongate second strip 13 (i.e., the elongate susceptor 12) is, therefore, not visible at the distal end 11a of the aerosol generating article 2.

The aerosol generating article 2 comprises a mouthpiece segment 20 positioned downstream of the aerosol generating substrate 10. The aerosol generating substrate 10 and the mouthpiece segment 20 are arranged in coaxial alignment inside the wrapper 14 to hold the components in position to form the rod-shaped aerosol generating article 2. The mouthpiece segment 20 has the same construction, and includes the same components, as the mouthpiece segment 20 described above in connection with the first example of the aerosol generating article 1.

The elongate first strips 15 and the elongate carrier strip 17 typically comprise plant derived material, such as tobacco. The elongate first strips 15 and the elongate carrier strip 17 can advantageously comprise reconstituted tobacco including tobacco and any one or more of cellulose fibres, tobacco stalk fibres and inorganic fillers such as CaCO3.

The elongate first strips 15 and the elongate carrier strip 17 typically comprise an aerosol-former such as glycerine or propylene glycol. Typically, the elongate first strips 15 and the elongate carrier strip 17 comprise an aerosol-former content of between approximately 5% and approximately 50% on a dry weight basis. Upon heating, the elongate first strips 15 and the elongate carrier strip 17 release volatile compounds possibly including nicotine or flavour compounds such as tobacco flavouring.

When a time varying electromagnetic field is applied in the vicinity of the elongate second strip 13 during use of the article 2 in an aerosol generating device, heat is generated in the elongate second strip 13 due to eddy currents and magnetic hysteresis losses. The heat is transferred from the elongate second strip 13 to the elongate first strips 15 and the elongate carrier strip 17 to heat the elongate first strips 15 and the elongate carrier strip 17 without burning them to release one or more volatile compounds and thereby generate a vapour. As a user inhales through the filter segment 24, the heated vapour is drawn in a downstream direction through the article 2 from the first end 10a of the aerosol generating substrate 10 towards the second end 10b of the aerosol generating substrate 10, and towards the filter segment 24. As the heated vapour flows through the cooling segment 22 and the center hole segment 23 towards the filter segment 24, the heated vapour cools and condenses to form an aerosol with suitable characteristics for inhalation by a user through the filter segment 24.

### Manufacture of Aerosol Generating Articles (Example 2): Embodiment 1

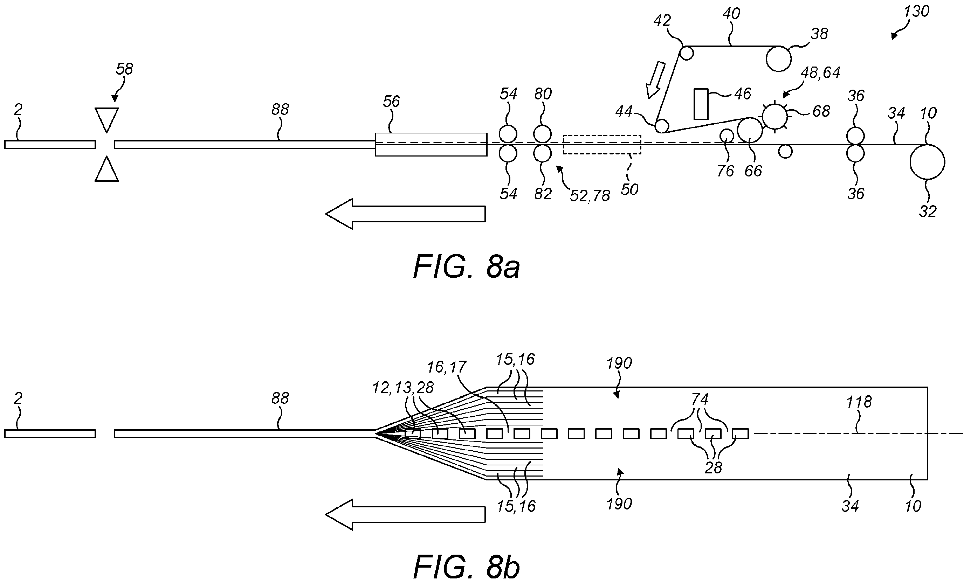

Referring to Figure 8a, there is shown a diagrammatic illustration of a first embodiment of an apparatus 130 and method for manufacturing the second example of the aerosol generating article 2 described above with reference to Figures 7a and 7b. Figure 8b is a plan view of an aerosol generating substrate 10 and susceptor patches 28 as they move through the apparatus 130, in the direction of the arrow in Figure 8b. The apparatus 130 and method are similar to the apparatus 30 and method described above with reference to Figures 2 to 6 and corresponding components will be identified using the same reference numerals.

The apparatus 130 comprises a substrate supply reel 32 (e.g. a first bobbin) which carries a continuous web 34 of an aerosol generating substrate 10 having a substantially flat surface with a centre line 118 and first feed rollers 36 for controlling the feed of the continuous web 34 of aerosol generating substrate 10. The apparatus 130 may also include a web tension regulator and a web edge control system as will be understood by one of ordinary skill in the art, but these additional components are not essential in the context of the present disclosure and have, therefore, been omitted for the sake of simplicity.

The apparatus 130 comprises a susceptor supply reel 38 (e.g. a second bobbin) which carries a continuous web 40 of susceptor material, feed rollers 42, 44 for controlling the feed of the continuous web 40 of susceptor material, an adhesive applicator unit 46, and a susceptor cutting unit 48.

The apparatus 130 further comprises an optional heater 50, a strip cutting unit 52, feed rollers 54, a rod forming unit 56, and a rod cutting unit 58.

### Susceptor Patch Preparation

In operation, a continuous web 34 of aerosol generating substrate 10 is continuously supplied from the substrate supply reel 32. At the same time, susceptor patches 28 are prepared in exactly the same manner described above in connection with the apparatus 30 and corresponding method, and the details will not be repeated. As will become apparent from the description below, each susceptor patch 28 corresponds to the elongate second strip 13 (i.e., the elongate susceptor 12) in the finished aerosol generating article 2 described above with reference to Figures 7a and 7b.

### Susceptor Patch Application

The susceptor patches 28 provided by the susceptor cutting unit 48 can be applied to the surface of the continuous web 34 of aerosol generating substrate 10 so that there is a constant and predetermined spacing 74 between the edges of each successive susceptor patch 28, for example as shown in Figures 8b and 4. The constant and predetermined spacing 74, which may, for example, be between 1 mm and 20 mm, is achieved in the same manner described above in connection with the apparatus 30 and corresponding method.

The susceptor patches 28 with the adhesive 47 applied thereto are continuously and consecutively adhered to the flat surface of the continuous web 34 of aerosol generating substrate 10 substantially along the centre line 118. Exposed side regions 190 of the continuous web 34 of aerosol generating substrate are thereby formed on both sides of the susceptor patches 28 (see Figure 8b) because, as noted above, the continuous web 34 of aerosol generating substrate 10 is substantially wider than the susceptor patches 28. Adjacent susceptor patches 28 are also spaced apart in the direction of travel of the continuous web 34 of aerosol generating substrate 10 by the constant and predetermined spacing 74 between the edges of the susceptor patches 28 that is generated when the susceptor patches 28 are formed in the susceptor cutting unit 48.

In order to ensure that there is adequate adhesion between the susceptor patches 28 and the substantially flat surface of the continuous web 34 of aerosol generating substrate 10, the susceptor patches 28 can be pressed onto the substantially flat surface by a cam roller 76, shown diagrammatically in Figure 8a. The rotation of the cam roller 76 is synchronized with the movement of the continuous web 34 of aerosol generating substrate 10 so that a pressing force is applied to consecutive susceptor patches 28, but not to the spaced regions between consecutive susceptor patches 28.

Depending on the properties of the adhesive 47 applied to the continuous web 40 of susceptor material (and hence to the susceptor patches 28) by the adhesive applicator unit 46, the continuous web 34 of aerosol generating substrate 10 and the susceptor patches 28 adhered to the surface thereof can be heated by the optional heater 50. As noted above, this may help to cure or set the adhesive 47, and thereby ensure a good bond between each susceptor patch 28 and the flat surface of the continuous web 34 of aerosol generating substrate 10.

### Strip Cutting

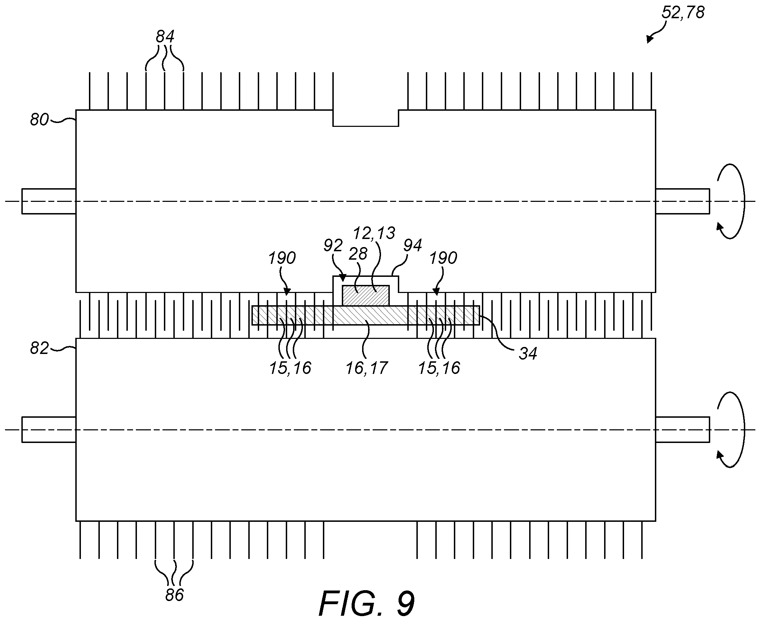

The continuous web 34 of aerosol generating substrate 10 with the spaced susceptor patches 28 adhered to its flat surface is fed to the strip cutting unit 52 (best seen in Figure 9). The strip cutting unit 52 cuts only the exposed side regions 190 of the continuous web 34 of aerosol generating substrate 10, without cutting the susceptor patches 28, to form a plurality of continuous aerosol generating strips 16 alongside the susceptor patches 28. In an embodiment, the strip cutting unit 52 cuts the exposed side regions 190 of the continuous web 34 of aerosol generating substrate 10 to form aerosol generating strips 16 having a strip width of approximately 1 mm.

As shown in Figures 8a and 9, the strip cutting unit 52 is a rotary cutter unit 78 and comprises first and second cutting drums 80, 82. The first cutting drum 80 includes circumferentially extending first cutting formations 84 and the second cutting drum 82 includes circumferentially extending second cutting formations 86. The first and second cutting formations 84, 86 cooperate (e.g., intermesh) to shear cut the exposed side regions 190 of the continuous web 34 of aerosol generating substrate 10 in the direction of travel of the continuous web 34 to form the continuous aerosol generating strips 16, and specifically to form the elongate first strips 15 illustrated in Figures 7a and 7b.

In order to provide for cutting of only the exposed side regions 190 of the continuous web 34 of aerosol generating substrate 10 to form the elongate first strips 15, the first and second cutting drums 80, 82 define therebetween a non-cutting region 92 which accommodates the susceptor patch 28 and the part of the continuous web 34 of aerosol generating substrate 10 to which the susceptor patch 28 is adhered. In the illustrated embodiment, the first cutting drum 80 is formed without the first cutting formations 84 in the non-cutting region 92. Similarly, the second cutting drum 82 is also formed without the second cutting formations 86 in the non-cutting region 92. Furthermore, the first cutting drum 80 includes a circumferentially extending recess 94 in its surface in the non-cutting region 92, so that at least part of the susceptor patch 28 can be accommodated in the circumferentially extending recess 94 during cutting of the exposed side regions 190 of the continuous web 34 of aerosol generating substrate 10. It will, thus, be understood that when the exposed side regions 190 of the continuous web 34 of aerosol generating substrate 10 are cut to form the elongate first strips 15 by virtue of the cooperation between the first and second cutting formations 84, 86 on the first and second cutting drums 80, 82 respectively, the central portion of the continuous web 34 of aerosol generating substrate 10 that is accommodated in the non-cutting region 92 and that is not cut into strips constitutes the elongate carrier strip 17 described above with reference to Figure 7b.

### Rod Formation

The aerosol generating strips 16 formed by cutting the exposed side regions 190 of the continuous web 34 of aerosol generating substrate 10, the elongate carrier strip 17 and the adhered susceptor patches 28 are conveyed to the rod forming unit 56 where they are formed into a continuous rod 88. If desired, a continuous sheet of wrapping paper (not shown) can be supplied to the rod forming unit 56 from a supply reel (not shown) or can be supplied to a separate wrapping unit (again from a supply reel) which can be positioned downstream of the rod forming unit 56. As the sheet of wrapping paper is transported and guided through the rod forming unit 56 or the separate wrapping unit, it can be wrapped around the aerosol generating strips 16 and the susceptor patches 28 so that the continuous rod 88 is circumscribed by a wrapper 14.

### Rod Cutting

The continuous rod 88 (optionally circumscribed by a wrapper 14) is then transported to the rod cutting unit 58 where it is cut at appropriate positions into predetermined lengths to form multiple aerosol generating articles 2. The aerosol generating articles 2 formed by the rod cutting unit 58 may have a length between 5 mm and 50 mm, preferably between 10 mm and 30 mm. It will be understood that this length corresponds to the length of the aerosol generating substrate 10 described above with reference to Figures 7a and 7b. The continuous rod 88 is preferably cut repeatedly by the rod cutting unit 58 substantially at a midpoint between the edges of the susceptor patches 28. In this way, the susceptor patches 28 are not cut by the rod cutting unit 58, thereby reducing wear on the cutting elements. Further, because the susceptor patches 28 are shorter than the aerosol generating strips 16, the ends of the individual susceptor patches 28 (i.e., the elongate second strips 13) are not visible at either end of the aerosol generating articles 2 formed by the rod cutting unit 58. It will be understood that this type of method is particularly suitable for the mass production of aerosol generating articles 2.

### Final Assembly

Further units (not shown) may be arranged downstream of the rod cutting unit 58 and may be configured to provide one or more additional components such as the mouthpiece segment 20 described above and to assemble these with the individual aerosol generating articles 2 formed by the rod cutting unit 56 to form finished aerosol generating articles 2, for example of the type illustrated in Figure 7. In this case, a separate wrapping unit may be provided downstream of the rod cutting unit 58 so that the assembled components can be simultaneously wrapped to form the finished aerosol generating articles 2. The further units may form part of the apparatus 130 or may be separate, stand-alone, units forming part of a final assembly line.

### Manufacture of Aerosol Generating Articles (Example 2): Embodiment 2

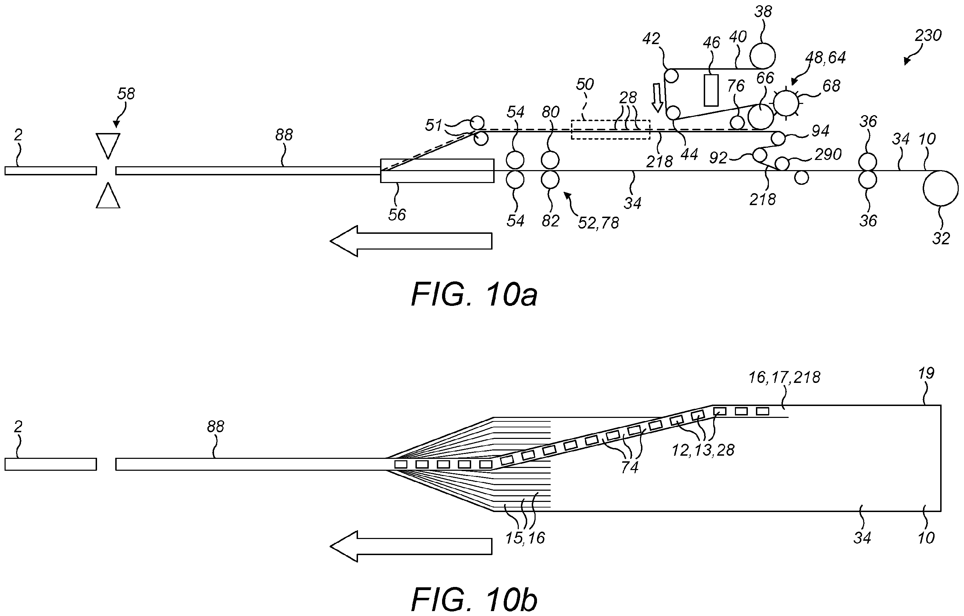

Referring to Figure 10a, there is shown a diagrammatic illustration of a second embodiment of an apparatus 230 and method for manufacturing the second example of the aerosol generating article 2 described above with reference to Figures 7a and 7b.

Figure 10b is a plan view of an aerosol generating substrate 10 and susceptor patches 28 as they move through the apparatus 230, in the direction of the arrow in Figure 10b. The apparatus 230 and method are similar to the apparatus 30, 130 and method described above with reference to Figures 2 to 6 and Figures 8 to 9 and corresponding components will be identified using the same reference numerals.

The apparatus 230 comprises a substrate supply reel 32 (e.g. a first bobbin) which carries a continuous web 34 of an aerosol generating substrate 10 having a substantially flat surface and first feed rollers 36 for controlling the feed of the continuous web 34 of aerosol generating substrate 10. The apparatus 230 may also include a web tension regulator and a web edge control system as will be understood by one of ordinary skill in the art, but these additional components are not essential in the context of the present disclosure and have, therefore, been omitted for the sake of simplicity.

The apparatus 230 further comprises a rotary cutter unit 290, for example including a circular cutting knife, which cuts the continuous web 34 of aerosol generating substrate 10 along one edge 19 to separate a continuous strip 218 of aerosol generating substrate 10 from the continuous web 34. The continuous strip 218 of aerosol generating substrate 10 corresponds to the elongate carrier strip 17 in the finished aerosol generating article 2 described above with reference to Figures 7a and 7b. The continuous strip 218 of aerosol generating substrate 10 has a substantially flat surface and is transported away from the continuous web 34 of aerosol generating substrate 10, for example in an upward direction as best seen in Figure 10a, by transport rollers 92, 94 so that the continuous strip 218 and the continuous web 34 can be processed separately by the apparatus 230.

The apparatus 230 also comprises a susceptor supply reel 38 (e.g. a second bobbin) which carries a continuous web 40 of susceptor material, feed rollers 42, 44 for controlling the feed of the continuous web 40 of susceptor material, an adhesive applicator unit 46, and a susceptor cutting unit 48.

The apparatus 230 further comprises an optional heater 50, feed rollers 51, a strip cutting unit 52, feed rollers 54, a rod forming unit 56, and a rod cutting unit 58.

### Susceptor Patch Preparation

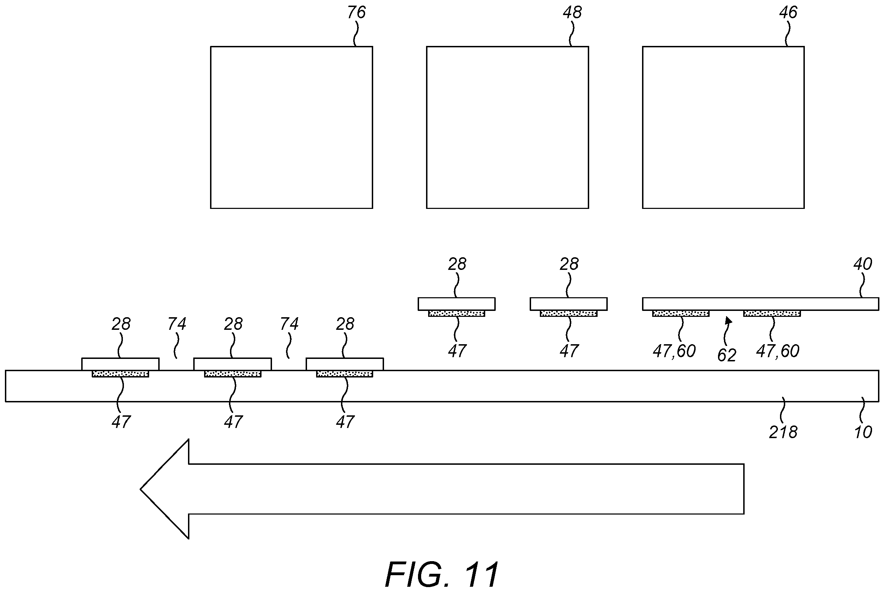

In operation, a continuous web 34 of aerosol generating substrate 10 is continuously supplied from the substrate supply reel 32 and a continuous strip 218 of aerosol generating substrate 10 is separated from an edge 19 of the continuous web 34 by the rotary cutter unit 290 and transported away from the continuous web 34 by the transport rollers 92, 94 as described above. At the same time, a continuous web 40 of susceptor material is continuously supplied from the susceptor supply reel 38, via the feed rollers 42, 44, to the adhesive applicator unit 46. The adhesive applicator unit 46 applies an adhesive 47 to a surface of the continuous web 40 of susceptor material. In the illustrated example, the adhesive applicator unit 46 applies the adhesive 47 to the surface of the continuous web 40 of susceptor material intermittently, and across the full width of the web 40. In this way, discrete adhesive areas 60 (see Figures 3 and 11) are formed on the surface of the continuous web 40 of susceptor material, with adhesive-free areas 62 being formed between adj acent adhesive areas 60 in the direction of travel of the continuous web 40 of susceptor material.

The continuous web 40 of susceptor material is supplied from the adhesive applicator unit 46 to the susceptor cutting unit 48 which continuously cuts the continuous web 40 of susceptor material to form a plurality of susceptor patches 28. The construction and operation of the susceptor cutting unit 48 is the same as that described above in connection with Figure 5. As will become apparent from the description below, each susceptor patch 28 corresponds to the elongate second strip 13 (i.e., the elongate susceptor 12) in the finished aerosol generating article 2 described above with reference to Figures 7a and 7b.

As best seen in Figure 10b, the continuous web 40 of susceptor material, and hence the susceptor patches 28, have a width which is less than a width of the continuous strip 218 of aerosol generating substrate 10. For example, the continuous web 40 of susceptor material, and hence the susceptor patches 28, can have a width of between approximately 0.1 mm and 7 mm. In some embodiments, the susceptor patches 28 can have a length of between approximately 5 mm and 50 mm in the direction of travel of the continuous web 40 of susceptor material and can have a thickness of between approximately 1 µm and 500 µm.

In order to minimise soiling of the susceptor cutting unit 48 by the adhesive 47 applied to the continuous web 40 of susceptor material by the adhesive applicator unit 46, the susceptor cutting unit 48 cuts the continuous web 40 of susceptor material in the adhesive-free areas 62, that is at positions between the adhesive areas 60 on the surface of the continuous web 40 of susceptor material. This can be achieved by synchronising the operation of the susceptor cutting unit 48 with the movement of the continuous web 40 of susceptor material.

### Susceptor Patch Application

The susceptor patches 28 provided by the susceptor cutting unit 48 can be applied to the flat surface of the continuous strip 218 of aerosol generating substrate 10 so that there is a constant and predetermined spacing 74 between the edges of each successive susceptor patch 28, for example as shown in Figures 10b and 11. The constant and predetermined spacing 74, which may, for example, be between 1 mm and 20 mm, is achieved in the same manner described above in connection with the apparatus 30 and corresponding method.

The susceptor patches 28 with the adhesive 47 applied thereto are continuously and consecutively adhered to the flat surface of the continuous strip 218 of aerosol generating substrate 10 substantially along a centre of the continuous strip 218. Adjacent susceptor patches 28 are spaced apart in the direction of travel of the continuous strip 218 of aerosol generating substrate 10 by the constant and predetermined spacing 74 between the edges of the susceptor patches 28 that is generated when the susceptor patches 28 are formed in the susceptor cutting unit 48.

In order to ensure that there is adequate adhesion between the susceptor patches 28 and the substantially flat surface of the continuous strip 218 of aerosol generating substrate 10, the susceptor patches 28 can be pressed onto the substantially flat surface by a cam roller 76, shown diagrammatically in Figure 10a. The rotation of the cam roller 76 is synchronized with the movement of the continuous strip 218 of aerosol generating substrate 10 so that a pressing force is applied to consecutive susceptor patches 28, but not to the spaced regions between consecutive susceptor patches 28.

Depending on the properties of the adhesive 47 applied to the continuous web 40 of susceptor material (and hence to the susceptor patches 28) by the adhesive applicator unit 46, the continuous strip 218 of aerosol generating substrate 10 and the susceptor patches 28 adhered to the surface thereof can be heated by the optional heater 50. As noted above, this may help to cure or set the adhesive 47, and thereby ensure a good bond between each susceptor patch 28 and the flat surface of the continuous strip 218 of aerosol generating substrate 10.

### Strip Cutting

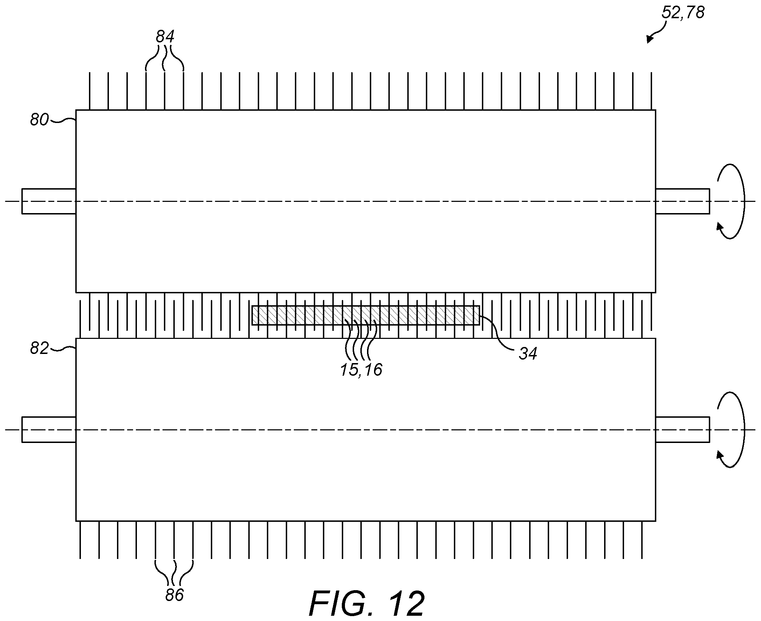

After the continuous strip 218 of aerosol generating substrate 10 has been separated from an edge 19 of the continuous web 34 of aerosol generating substrate 10 by the rotary cutter unit 290, the remaining web 34 of aerosol generating substrate 10 is fed to the strip cutting unit 52 (best seen in Figure 12). The strip cutting unit 52 cuts the continuous web 34 of aerosol generating substrate 10 across its full width to form a plurality of continuous aerosol generating strips 16 which correspond to the elongate first strips 15 in the finished aerosol generating article 2 described above with reference to Figures 7a and 7b. In an embodiment, the strip cutting unit 52 cuts the continuous web 34 of aerosol generating substrate 10 to form aerosol generating strips 16 having a strip width of approximately 1 mm.

As shown in Figures 10a and 12, the strip cutting unit 52 is a rotary cutter unit 78 and comprises first and second cutting drums 80, 82. The first cutting drum 80 includes circumferentially extending first cutting formations 84 and the second cutting drum 82 includes circumferentially extending second cutting formations 86. The first and second cutting formations 84, 86 cooperate (e.g. intermesh) to shear cut the continuous web 34 of aerosol generating substrate 10 in the direction of travel of the continuous web 34 to form the plurality of aerosol generating strips 16, and specifically to form the elongate first strips 15 illustrated in Figures 7a and 7b.

### Rod Formation

The aerosol generating strips 16 formed by cutting the continuous web 34 of aerosol generating substrate 10 are conveyed to the rod forming unit 56 where they are formed into a continuous rod 88. The continuous strip 218 of aerosol generating substrate 10 with the adhered susceptor patches 28 is also conveyed to the rod forming unit 56 by the feed rollers 51 and is combined with the aerosol generating strips 16 to form the continuous rod 88. If desired, a continuous sheet of wrapping paper (not shown) can be supplied to the rod forming unit 56 from a supply reel (not shown) or can be supplied to a separate wrapping unit (again from a supply reel) which can be positioned downstream of the rod forming unit 56. As the sheet of wrapping paper is transported and guided through the rod forming unit 56 or the separate wrapping unit, it can be wrapped around the aerosol generating strips 16 and the susceptor patches 28 so that the continuous rod 88 is circumscribed by a wrapper 14.

### Rod Cutting

The continuous rod 88 (optionally circumscribed by a wrapper 14) is then transported to the rod cutting unit 58 where it is cut at appropriate positions into predetermined lengths to form multiple aerosol generating articles 2. The aerosol generating articles 2 formed by the rod cutting unit 58 may have a length between 5 mm and 50 mm, preferably between 10 mm and 30 mm. It will be understood that this length corresponds to the length of the aerosol generating substrate 10 described above with reference to Figures 7a and 7b. The continuous rod 88 is preferably cut repeatedly by the rod cutting unit 58 substantially at a midpoint between the edges of the susceptor patches 28. In this way, the susceptor patches 28 are not cut by the rod cutting unit 58, thereby reducing wear on the cutting elements. Further, because the susceptor patches 28 are shorter than the aerosol generating strips 16, the ends of the individual susceptor patches 28 (i.e., the elongate second strips 13) are not visible at either end of the aerosol generating articles 2 formed by the rod cutting unit 58. It will be understood that this type of method is particularly suitable for the mass production of aerosol generating articles 2.

### Final Assembly

Further units (not shown) may be arranged downstream of the rod cutting unit 58 and may be configured to provide one or more additional components such as the mouthpiece segment 20 described above and to assemble these with the individual aerosol generating articles 2 formed by the rod cutting unit 56 to form finished aerosol generating articles 2, for example of the type illustrated in Figure 7. In this case, a separate wrapping unit may be provided downstream of the rod cutting unit 58 so that the assembled components can be simultaneously wrapped to form the finished aerosol generating articles 2. The further units may form part of the apparatus 230 or may be separate, stand-alone, units forming part of a final assembly line.

Although exemplary embodiments have been described in the preceding paragraphs, it should be understood that various modifications may be made to those embodiments without departing from the scope of the appended claims. Thus, the breadth and scope of the claims should not be limited to the above-described exemplary embodiments.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A method for continuously manufacturing aerosol generating articles (1, 2), the method comprising:
(i) providing a continuous web (34) or a continuous strip (218) of an aerosol generating substrate (10), the continuous web (34) or the continuous strip (218) having a substantially flat surface;
(ii) providing a continuous web (40) of susceptor material;
(iii) intermittently applying an adhesive (47) to a surface of the continuous web (40) of susceptor material to form adhesive areas (60) on the surface;
(iv) continuously cutting the continuous web (40) of susceptor material at positions between the adhesive areas (60) to form at least one susceptor patch (28);
(v) adhering the at least one susceptor patch (28) to the substantially flat surface of the continuous web (34) or the continuous strip (218) of aerosol generating substrate (10); and
(vi) forming the continuous web (34) or the continuous strip (218) of aerosol generating substrate (10) and the susceptor patch (28) adhered to the surface thereof into a continuous rod (88).

2. A method according to claim 1, wherein step (iv) comprises continuously cutting the continuous web (40) of susceptor material at positions between the adhesive areas (60) to form a plurality of susceptor patches (28).

3. A method according to claim 1 or claim 2, wherein step (iii) comprises intermittently applying the adhesive (47) to the surface of the continuous web (40) of susceptor material across substantially a full width of the web (40) of susceptor material.

4. A method according to any of claims 3 to 5, wherein the method comprises, after step (v) and prior to step (vi), heating the adhesive (47) to cure or set the adhesive (47).

5. A method according to any preceding claim, wherein step (v) comprises pressing the at least one susceptor patch (28) onto the substantially flat surface of the continuous web (34) or the continuous strip (218).

6. A method according to claim 5, wherein the pressing step is performed using a cam roller (76).

7. A method according to any preceding claim, wherein the at least one susceptor patch (28) has a length of between 5 mm and 50 mm, and preferably the at least one susceptor patch (28) has a length between 10 mm and 30 mm.

8. A method according to any preceding claim, wherein the substantially flat surface of the continuous web (34) or the continuous strip (218) of aerosol generating substrate (10) provided in step (i) includes a centre line (118), and step (v) comprises adhering the at least one susceptor patch (28) to the substantially flat surface substantially along the centre line (118).

9. A method according to claim 2, wherein step (v) comprises consecutively adhering the plurality of susceptor patches (28) to the substantially flat surface of the continuous web (34) or the continuous strip (218) of aerosol generating substrate (10) with a predefined and constant spacing (74) between each successive susceptor patch (28) and step (vi) comprises forming the continuous web (34) or the continuous strip (218) of aerosol generating substrate (10) and the susceptor patches (28) into a continuous rod (88).

10. A method according to any preceding claim, wherein the method further comprises:
(vii) cutting the continuous rod (88) to form a plurality of individual aerosol generating articles (1, 2).

11. A method according to claim 10, wherein each individual aerosol generating article (1, 2) comprises at least one susceptor patch (28).

12. A method according to claim 10 or claim 11 when dependent on claim 9, wherein step (vii) comprises cutting the continuous rod (88) at a position between adjacent susceptor patches (28).

13. A method according to claim 12, wherein step (vii) comprises cutting the continuous rod (88) substantially at a midpoint between adjacent susceptor patches (28).

## Patentansprüche

1. Verfahren zum kontinuierlichen Herstellen von Aerosol erzeugenden Artikeln (1, 2), wobei das Verfahren Folgendes umfasst:
(i) Bereitstellen einer Endlosbahn (34) oder eines Endlosstreifens (218) eines Aerosol erzeugenden Substrats (10), wobei die Endlosbahn (34) oder der Endlosstreifen (218) eine im Wesentlichen flache Oberfläche aufweist;
(ii) Bereitstellen einer Endlosbahn (40) aus Suszeptormaterial;
(iii) schrittweises Aufbringen eines Klebstoffs (47) auf eine Oberfläche der Endlosbahn (40) aus Suszeptormaterial, um Klebstoffbereiche (60) auf der Oberfläche zu bilden;
(iv) kontinuierliches Schneiden der Endlosbahn (40) aus Suszeptormaterial an Positionen zwischen den Klebstoffbereichen (60), um mindestens einen Suszeptorfleck (28) zu bilden;
(v) Ankleben des mindestens einen Suszeptorflecks (28) an die im Wesentlichen flache Oberfläche der Endlosbahn (34) oder des Endlosstreifens (218) aus Aerosol erzeugendem Substrat (10); und
(vi) Bilden der Endlosbahn (34) oder des Endlosstreifens (218) aus Aerosol erzeugendem Substrat (10) und des an seine Oberfläche geklebten Suszeptorflecks (28) zu einer Endlosstange (88).

2. Verfahren nach Anspruch 1, wobei Schritt (iv) kontinuierliches Schneiden der Endlosbahn (40) aus Suszeptormaterial an Positionen zwischen den Klebstoffbereichen (60) umfasst, um eine Vielzahl von Suszeptorflecken (28) zu bilden.

3. Verfahren nach Anspruch 1 oder Anspruch 2, wobei Schritt (iii) schrittweises Aufbringen des Klebstoffs (47) auf die Oberfläche der Endlosbahn (40) aus Suszeptormaterial über im Wesentlichen eine volle Breite der Bahn (40) aus Suszeptormaterial umfasst.

4. Verfahren nach einem der Ansprüche 3 bis 5, wobei das Verfahren nach Schritt (v) und vor Schritt (vi) Erhitzen des Klebstoffs (47) umfasst, um den Klebstoff (47) auszuhärten oder zu erhärten.

5. Verfahren nach einem der vorstehenden Ansprüche, wobei Schritt (v) Pressen des mindestens einen Suszeptorflecks (28) auf die im Wesentlichen flache Oberfläche der Endlosbahn (34) oder des Endlosstreifens (218) umfasst.

6. Verfahren nach Anspruch 5, wobei der Pressschritt unter Verwendung einer Nockenwalze (76) durchgeführt wird.

7. Verfahren nach einem der vorstehenden Ansprüche, wobei der mindestens eine Suszeptorfleck (28) eine Länge zwischen 5 mm und 50 mm aufweist, und der mindestens eine Suszeptorfleck (28) vorzugsweise eine Länge zwischen 10 mm und 30 mm aufweist.

8. Verfahren nach einem der vorstehenden Ansprüche, wobei die im Wesentlichen flache Oberfläche der Endlosbahn (34) oder des Endlosstreifens (218) aus Aerosol erzeugendem Substrat (10), wie in Schritt (i) bereitgestellt, eine Mittellinie (118) beinhaltet und Schritt (v) Ankleben des mindestens einen Suszeptorflecks (28) an die im Wesentlichen flache Oberfläche im Wesentlichen entlang der Mittellinie (118) umfasst.

9. Verfahren nach Anspruch 2, wobei Schritt (v) aufeinanderfolgendes Ankleben der Vielzahl von Suszeptorflecken (28) an die im Wesentlichen flache Oberfläche der Endlosbahn (34) oder des Endlosstreifens (218) aus Aerosol erzeugendem Substrat (10) mit einem vordefinierten und konstanten Abstand (74) zwischen jedem folgenden Suszeptorfleck (28) umfasst und Schritt (vi) Bilden der Endlosbahn (34) oder des Endlosstreifens (218) aus Aerosol erzeugendem Substrat (10) und der Suszeptorflecke (28) zu einer Endlosstange (88) umfasst.

10. Verfahren nach einem der vorstehenden Ansprüche, wobei das Verfahren weiter Folgendes umfasst:
(vii) Schneiden der Endlosstange (88), um eine Vielzahl einzelner Aerosol erzeugender Artikel (1, 2) zu bilden.

11. Verfahren nach Anspruch 10, wobei jeder einzelne Aerosol erzeugende Artikel (1, 2) mindestens einen Suszeptorfleck (28) umfasst.

12. Verfahren nach Anspruch 10 oder Anspruch 11, wenn von Anspruch 9 abhängig, wobei Schritt (vii) Schneiden der Endlosstange (88) an einer Position zwischen benachbarten Suszeptorflecken (28) umfasst.

13. Verfahren nach Anspruch 12, wobei Schritt (vii) Schneiden der Endlosstange (88) im Wesentlichen an einem Mittelpunkt zwischen benachbarten Suszeptorflecken (28) umfasst.

## Revendications

1. Procédé de fabrication en continu d'articles générateurs aérosol (1, 2), le procédé comprenant les étapes consistant à :
(i) fournir une toile continue (34) ou une bande continue (218) d'un substrat générateur d'aérosol (10), la toile continue (34) ou la bande continue (218) présentant une surface sensiblement plate ;
(ii) fournir une toile continue (40) de matériau suscepteur ;
(iii) appliquer par intermittence un adhésif (47) sur une surface de la toile continue (40) de matériau suscepteur pour former des zones adhésives (60) sur la surface ;
(iv) couper en continu la toile continue (40) de matériau suscepteur à des positions entre les zones adhésives (60) pour former au moins une pastille de suscepteur(28) ;
(v) faire adhérer la au moins une pastille de suscepteur (28) à la surface sensiblement plate de la toile continue (34) ou de la bande continue (218) de substrat générateur d'aérosol (10) ; et
(vi) former la toile continue (34) ou la bande continue (218) de substrat générateur d'aérosol (10) et la pastille de suscepteur (28) adhérant à la surface de celle-ci sous la forme d'une tige continue (88).

2. Procédé selon la revendication 1, dans lequel l'étape (iv) comprend la coupe en continu de la toile continue (40) de matériau suscepteur à des positions entre les zones adhésives (60) pour former une pluralité de pastilles de suscepteur (28).

3. Procédé selon la revendication 1 ou la revendication 2, dans lequel l'étape (iii) comprend l'application par intermittence de l'adhésif (47) sur la surface de la toile continue (40) de matériau suscepteur sur sensiblement toute la largeur de la toile (40) de matériau suscepteur.

4. Procédé selon l'une quelconque des revendications 3 à 5, dans lequel le procédé comprend, après l'étape (v) et avant l'étape (vi), le chauffage de l'adhésif (47) pour durcir ou solidifier l'adhésif (47).

5. Procédé selon une quelconque revendication précédente, dans lequel l'étape (v) comprend le pressage de la au moins une pastille de suscepteur (28) sur la surface sensiblement plate de la toile continue (34) ou de la bande continue (218).

6. Procédé selon la revendication 5, dans lequel l'étape de pressage est effectuée en utilisant un galet de came (76).

7. Procédé selon une quelconque revendication précédente, dans lequel la au moins une pastille de suscepteur (28) présente une longueur entre 5 mm et 50 mm, et de préférence la au moins une pastille de suscepteur (28) présente une longueur entre 10 mm et 30 mm.

8. Procédé selon une quelconque revendication précédente, dans lequel la surface sensiblement plate de la toile continue (34) ou de la bande continue (218) de substrat générateur d'aérosol (10) fournie dans l'étape (i) inclut une ligne centrale (118), et l'étape (v) comprend le collage de la au moins une pastille de suscepteur (28) sur la surface sensiblement plate sensiblement le long de la ligne centrale (118).

9. Procédé selon la revendication 2, dans lequel l'étape (v) comprend le collage consécutif de la pluralité de pastilles de suscepteur (28) sur la surface sensiblement plate de la toile continue (34) ou de la bande continue (218) de substrat générateur d'aérosol (10) avec un espacement prédéfini et constant (74) entre chaque pastille de suscepteur (28) successive et l'étape (vi) comprend la formation de la toile continue (34) ou de la bande continue (218) de substrat générateur d'aérosol (10) et des pastilles de suscepteur (28) sous la forme d'une tige continue (88).

10. Procédé selon une quelconque revendication précédente, dans lequel le procédé comprend en outre l'étape consistant à :
(vii) couper la tige continue (88) pour former une pluralité d'articles générateurs d'aérosol (1, 2) individuels.

11. Procédé selon la revendication 10, dans lequel chaque article générateur d'aérosol (1, 2) individuel comprend au moins une pastille de suscepteur (28).

12. Procédé selon la revendication 10 ou la revendication 11 lorsqu'elle dépend de la revendication 9, dans lequel l'étape (vii) comprend la coupe de la tige continue (88) à une position entre des pastilles de suscepteur (28) adjacentes.

13. Procédé selon la revendication 12, dans lequel l'étape (vii) comprend la coupe de la tige continue (88) sensiblement à un point médian entre des pastilles de suscepteur (28) adjacentes.
